# EUROPEAN PATENT APPLICATION

(11) **EP 4 024 716 A1**
(43) Date of publication of application: **06.07.2022**
(21) Application number: 19954490.9
(22) Date of filing: 11.12.2019
(51) Int. Cl.: H04B 1/44

(54) **HIGH-POWER UPLINK AND DOWNLINK SWITCHING DEVICE, AND COMMUNICATION APPARATUS**

(30) Priority: 26.11.2019 CN 201911171376
(71) Applicant: Comba Network Systems Company Limited, Guangzhou, Guangdong 510663 (CN)
(72) Inventor: LIU, Jiangtao, Guangzhou, Guangdong 510663 (CN); XIE, Luping, Guangzhou, Guangdong 510663 (CN); YAN, Shubao, Guangzhou, Guangdong 510663 (CN); FAN, Qiyan, Guangzhou, Guangdong 510663 (CN)
(74) Representative: Gulde & Partner
(86) International application number: PCT/CN2019/124699
(87) International publication number: WO 2021/103151

(57) **Abstract**

The present application relates to a high-power uplink and downlink switching device and a communication apparatus. A radio frequency switch and a synchronization control module of the high-power uplink and downlink switching device cooperate, on the basis of a first radio frequency port, to complete uplink and downlink switching. A circulator has a first port connected to an output end of a power amplification module, a second port connected to a second radio frequency port, and a third port connected to a low-noise amplifier module via a first radio frequency switch. The third port is further connected to a high-power load resistor and a second radio frequency switch via a first microstrip line, so as to be separately grounded. A radio frequency impedance from a first end to a second end of the first microstrip line is in a high-impedance state. With the structure described above, downlink reflection power is absorbed by the high-power load resistor without affecting uplink. In addition, when the uplink is active, the radio frequency switches cooperate with a periodic change in impedance of the microstrip line to ensure that radio frequency power does not leak to the load resistor, thereby achieving TDD switching for high-power capacities, and overcoming device power capacity limits.

## Description

### TECHNICAL FIELD

This application relates to the field of communication technology, and in particular to a high-power uplink and downlink switching device and communication apparatus.

### BACKGROUND

Currently, Information and Communication Technology is developing rapidly. With the large-scale application from the era of 2G (2-Generation wireless telephone technology) to the 4G (the 4th Generation Mobile Communication Technology), the traffic carried by the communication network, communication rate and bandwidth have increased dramatically, and this puts high demands on communication apparatus. In particular, the upcoming 5G (5th-Generation, fifth-generation mobile communication technology) communication era can connect everything, has an ultra-large bandwidth, ultra-low latency and other characteristics, which can meet application requirements in different scenarios, such as AR (Augmented Reality), autonomous driving and other applications.

The ultra-high performance and experience of 5G (the 5th Generation Mobile Communication Technology) communication have correspondingly brought new challenges to communication apparatus. For example, an operator has put forward a requirement for communication apparatus of 2.6GHz (Gigahertz) and 160W (watts). The proposal of this equipment has brought unprecedented challenges to the device, and traditional uplink and downlink switching devices cannot meet the needs of communication development.

### SUMMARY

Based on this, it is necessary to provide a high-power uplink and downlink switching device and communication apparatus to solve the problem that the traditional uplink and downlink switching device cannot meet the requirements of high-power communication apparatus.

In order to achieve the foregoing object, in one respect, an embodiment of the present application provides a high-power uplink and downlink switching device, including:
a radio frequency switch, a common end of which is used to connect to a first radio frequency port;
a power amplifier module, an input end of which is connected to a downlink end of the radio frequency switch;
a circulator, a first port of which is connected to an output end of the power amplifier module, and a second port of which is used to connect to a second radio frequency port;
a first radio frequency switch, a first end of which is connected to a third port of the circulator;
a low noise amplifier module, an input end of which is connected to a second end of the first radio frequency switch, and an output end of which is connected to an uplink end of the radio frequency switch;
a first microstrip line, a first end of which is connected to a third port of the circulator, wherein the radio frequency impedance from the first end to a second end of the first microstrip line is in a high impedance state;
a load resistor, a first end of which is connected to the second end of the first microstrip line, and the second end of which is grounded;
a second radio frequency switch, a first end of which is connected to the second end of the first microstrip line, and a second end of which is grounded; and
a synchronization control module, an input end of which is used to connect to the first radio frequency port, and an output end of which is respectively connected to a control end of the radio frequency switch, a control end of the first radio frequency switch and a control end of the second radio frequency switch.

In another respect, an embodiment of the present application also provides a communication apparatus, including the above-mentioned high-power uplink and downlink switching device.

One of the above technical solutions has the following advantages and beneficial effects:
Based on the first radio frequency port, the radio frequency switch and synchronization control module can cooperate to complete the switch between uplink channel and downlink channel. The first port of the circulator is connected to the output end of the power amplifier module, the second port is connected to the second radio frequency port, and the third port is connected to the low noise amplifier module through the first radio frequency switch. In addition, the third port is also connected to the high-power load resistor and the second radio frequency switch through the first microstrip line, respectively, for grounding. Here, the radio frequency impedance from the first end to the second end of the first microstrip line is in a high impedance state. Based on the above structure, the reflection downlink power can be absorbed by the high-power load resistor without affecting the uplink channel. In addition, when the uplink channel is turned on, the RF switch cooperates with the periodic conversion of the impedance characteristic of the microstrip line to ensure that the Radio frequency power does not leak to the load resistor, thereby realizing TDD (Time Division Duplexing) switching with high power capacity. Based on this, the embodiment of the present application can use a low-power radio frequency switch to achieve high-power uplink and downlink switching, overcome the limitation of the power capacity of the device, and have the advantages of low cost and easy implementation.

### BRIEF DESCRIPTION OF THE DRAWINGS

Figure 1 is a first schematic structural diagram of a high-power uplink and downlink switching apparatus according to an embodiment;
Figure 2 is a second schematic structural diagram of a high-power uplink and downlink switching apparatus according to an embodiment;
Figure 3 is a third schematic structural diagram of a high-power uplink and downlink switching apparatus according to an embodiment; and
Figure 4 is a fourth schematic structural diagram of a high-power uplink and downlink switching apparatus according to an embodiment.

### DETAILED DESCRIPTION

The ultra-high performance and experience of 5G communication put forward high requirements for communication apparatus, especially technical indicators such as power capacity, signal bandwidth, linearity and efficiency. Therefore, it is very difficult for equipment manufacturers to meet the requirements of operators. In order to achieve new requirements, they can only innovate technologically and overcome the bottleneck caused by the device level. Due to the limitations of the current device technology and design level, there is no high-power (greater than 100W (watt)), low-latency (nanosecond) RF switch, so the entire uplink and downlink active modules cannot be designed and integrated in a normal way. Therefore, for high-power communication apparatus, traditional high-power uplink and downlink TDD (Time Division Duplexing) switching devices cannot meet the requirements. To this end, an embodiment of the present application proposes an integrated active device that effectively meets the uplink and downlink switching of high-power TDD. It has the advantages of flexible control and low cost, and can meet the needs of next-generation mobile communications and equipment.

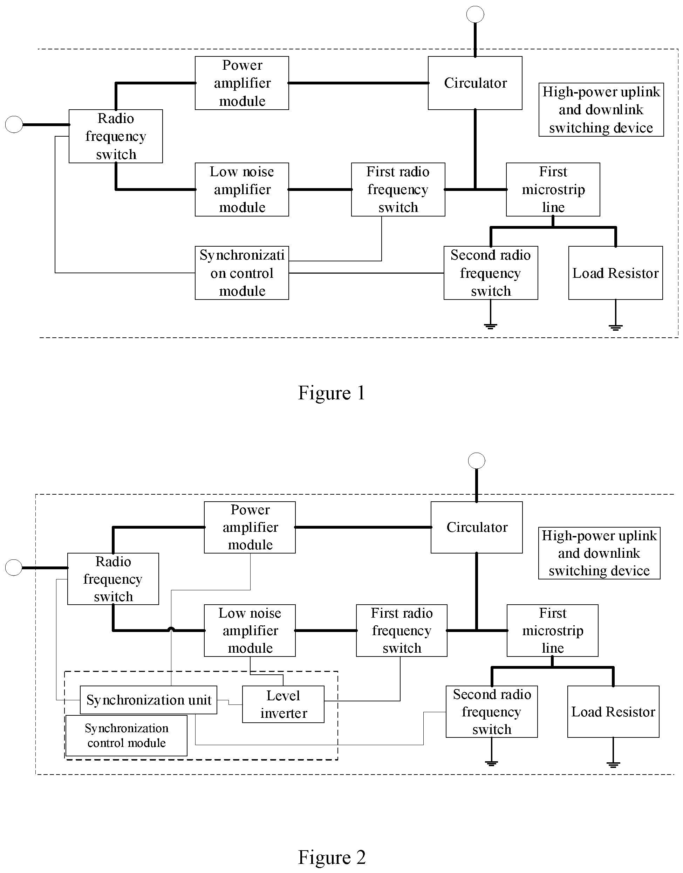

In one embodiment, a high-power uplink and downlink switching device is provided, as shown in figure 1, including:
a radio frequency switch, a common end of which is used to connect to a first radio frequency port;
a power amplifier module, an input end of which is connected to a downlink end of the radio frequency switch;
a circulator, a first port of which is connected to an output end of the power amplifier module, and a second port of which is used to connect to a second radio frequency port;
a first radio frequency switch, a first end of which is connected to a third port of the circulator;
a low noise amplifier module, an input end of which is connected to a second end of the first radio frequency switch, and an output end of which is connected to an uplink end of the radio frequency switch;
a first microstrip line, a first end of which is connected to a third port of the circulator, wherein the radio frequency impedance from the first end to a second end of the first microstrip line is in a high impedance state;
a load resistor, a first end of which is connected to the second end of the first microstrip line, and the second end of which is grounded;
a second radio frequency switch, a first end of which is connected to the second end of the first microstrip line, and a second end of which is grounded; and
a synchronization control module, an input end of which is used to connect to the first radio frequency port, and an output end of which is respectively connected to a control end of the radio frequency switch, a control end of the first radio frequency switch and a control end of the second radio frequency switch.

Specifically, the high-power uplink and downlink switching device includes the radio frequency switch, power amplifier module, circulator, first radio frequency switch, a low noise amplifier module, and synchronization control module. The common end of the radio frequency switching module is connected to the first radio frequency port, and is used to transmit an uplink signal to the first radio frequency port or receive a downlink signal transmitted by the first radio frequency port. The input end of the power amplifier module is connected to the downlink end of the radio frequency switch, and the output end is connected to the first port of the circulator. At the same time, the second port of the circulator is connected to the second radio frequency port for transmitting a downlink signal to the second radio frequency port or receiving an uplink signal transmitted by the second radio frequency port. Based on this, the radio frequency switch, the power amplifier module and the circulator cooperate to form a downlink channel. In addition, the input end of the low noise amplifier module is connected to the third port of the circulator through the first radio frequency switch, and the output end is connected to the uplink end of the radio frequency switch. Based on this, the radio frequency switch, the low noise amplifier module, the first radio frequency switch and the circulator cooperate to form an uplink channel. The input end of the synchronization control module is connected to the first radio frequency port, and the output end is respectively connected to the radio frequency switch and the first radio frequency switch. Based on this, the synchronization control module can obtain the synchronization signal through the first radio frequency port, control the radio frequency switch according to the synchronization signal to turn on the corresponding radio frequency channel, realize the switching between uplink and downlink, and control the on and off of the first radio frequency switch, thus avoiding crosstalk between the uplink and downlink signals.

Further, the high-power uplink and downlink switching device further includes a first microstrip line, a load resistor, and a second radio frequency switch. The first end of the first microstrip line is respectively connected to the third port of the circulator and the first end of the first radio frequency switch, and the second end is respectively connected to the first end of the load resistor and the first end of the second radio frequency switch. The second end of the load resistor and the second end of the second radio frequency switch are both grounded. At the same time, the radio frequency impedance from the first end to the second end of the first microstrip line is in a high impedance state. The output end of the synchronization control module is connected to the control end of the second radio frequency switch. Based on this, the synchronization control module can control the on and off of the second radio frequency switch according to the synchronization signal, and can control to turn on the first radio frequency switch and the second radio frequency switch, and this ensures that the Radio frequency impedance enters a high-impedance state after passing through the first microstrip line, so that the uplink signal can completely enter the uplink through the first RF switch, avoiding the leakage of Radio frequency power to the load resistance. The synchronization control module can also control the disconnection of the first radio frequency switch and the second radio frequency switch to ensure that the downlink reflection radio frequency signal is completely absorbed by the load resistance without affecting the uplink channel.

It should be noted that the range of high power mentioned in the embodiment of the present application may be 100W to 300W. The radio frequency switch can be a single-pole double-throw switch. The power amplifier module may include a power amplifier and a peripheral circuit. In the circulator, an external signal obtained from the first port is output from the second port, an external signal obtained from the second port is output from the third port, and an external signal obtained from the third port is output from the first port. The low noise amplifier module may include a low noise amplifier and a peripheral circuit. In the first microstrip line, the direction from the first end to the second end is in a high-impedance state, which can be realized by the electrical length and characteristic impedance of the microstrip line; wherein the electrical length is determined by the frequency and wavelength of a radio frequency signal. The synchronization control module can be used to obtain a synchronization signal from the first radio frequency port, and output a control signal according to the synchronization signal; wherein the synchronization signal can be coupled to the first radio frequency port by an external device, or can be obtained from TDD uplink and downlink signals. The control signal can be used to drive each radio frequency switch to act. Optionally, the synchronization control module may include a coupler, a switch device, a level inverter, etc., or may be mainly composed of a synchronization circuit or a processor, which is not specifically limited here.

The first radio frequency switch and the second radio frequency switch can be selected as a normally open radio frequency switch or a normally closed radio frequency switch according to actual needs. Correspondingly, when the synchronization control module controls the first radio frequency switch and the second radio frequency switch, it can output a control signal of a corresponding level to instruct a corresponding radio frequency switch to be on or off. Exemplarily, in the downlink signal transmission, the synchronization control module may output a high-level signal to the first radio frequency switch and the second radio frequency switch, so that the first radio frequency switch and the second radio frequency switch are turned off. At the same time, during the uplink signal transmission, the synchronization control module may output a low-level signal to the first radio frequency switch and the second radio frequency switch, so that the first radio frequency switch and the second radio frequency switch are turned on. It should be noted that the selection of the radio frequency switch and the control signal output by the synchronization control module can be matched and set according to actual needs, and there is no specific restriction here.

Based on the above structure, the reflection downlink power can be absorbed by the high-power load resistor without affecting the uplink channel. In addition, when the uplink channel is turned on, the RF switch cooperates with the periodic transformation of the impedance characteristic of the microstrip line to ensure that the Radio frequency power does not leak to the high-power load resistor, thereby realizing high-power capacity TDD switching. Based on this, the embodiment of the present application can use a low-power radio frequency switch to achieve high-power uplink and downlink switching, which overcomes the limitation of the power capacity of the device and has the advantage of low cost.

In an example, the transmission process of the downlink signal may be: the first radio frequency port obtains a downlink signal, and based on a first synchronization signal, the synchronization control module controls the radio frequency switch to turn on the downlink end and controls the first radio frequency switch and the second radio frequency switch to turn off; the first radio frequency port transmits the downlink signal to the power amplifier module through the radio frequency switch; the power amplifier module amplifies the downlink signal, and transmits the amplified downlink signal to the first port of the circulator, and then outputs the downlink signal from the second port of the circulator to the second radio frequency port to complete the amplification and output of the downlink signal; and at the same time, the reflection radio frequency signal generated in the downlink signal transmission process sequentially passes through the third port of the circulator and the first microstrip line to reach the load resistor, so as to achieve the absorption of the downlink reflection power and avoid affecting the uplink channel.

In another example, the transmission process of the uplink signal may be: the second radio frequency port obtains an uplink signal, and based on a second synchronization signal, the synchronization control module controls the radio frequency switch to turn on the uplink end, and controls the first radio frequency switch and the second radio frequency switch to turn on; the second radio frequency port transmits the uplink signal to the second port of the circulator, and then outputs the uplink signal from the third port of the circulator; since the Radio frequency impedance of the first microstrip line is in a high impedance state from the first end of the first RF switch to the load resistor, the uplink signal transmitted by the third port is completely transmitted to the low-noise amplifier module through the first radio frequency switch without leaking to the load resistor; and after the low noise amplifier module amplifies the uplink signal, the amplified uplink signal is transmitted to the first radio frequency port through the radio frequency switch to complete the amplification and output of the uplink signal.

In one embodiment, the output end of the synchronization control module is also connected to the control end of the power amplifier module and the control end of the low noise amplifier module respectively.

Specifically, the synchronization control module can also be used to control the power amplifier module and the low noise amplifier module. Exemplarily, the synchronization control module can control the power amplifier module to be powered on and the low noise amplifier to be powered off during the downlink signal transmission. Specifically, in the downlink signal transmission, the first output end of the synchronization control module can send a high-level to the power amplifier module, and the second output end can send a low-level to the low noise amplifier module, so as to realize the control of the power amplifier module and the low noise amplifier. For another example, in the uplink signal transmission, the synchronization control module can control the power amplifier module to power off and control the low noise amplifier to power on. Based on the above structure, the synchronization control module in the embodiment of the present application can control the power amplifier module and the low noise amplifier module according to the synchronization signal, further avoiding the crosstalk of the uplink and downlink signals, improving the reliability of the uplink and downlink switching, and reducing the energy consumption of the device.

In one embodiment, as shown in figure 2, the synchronization control module includes a synchronization unit and a level inverter.

An input end of the synchronization unit is used to connect to the first radio frequency port, and an output end of the synchronization unit is respectively connected to an input end of the level inverter, the control end of the radio frequency switch, the control end of the power amplifier module, and the control end of the second radio frequency switch. An output end of the level inverter is respectively connected to the control end of the low noise amplifier module and the control end of the first radio frequency switch.

Specifically, the synchronization control module may include the synchronization unit and the level inverter. The input end of the synchronization unit is used as the input end of the synchronization control module and is connected to the first radio frequency port. The output end of the synchronization unit is connected to the input end of the level inverter, and is used to control the radio frequency switch, the power amplifier module and the second radio frequency switch. The level inverter can be used to control the control end of the low noise amplifier module and the first radio frequency switch according to the signal transmitted by the synchronization unit. Based on the above structure, the embodiment of the present application can realize the synchronous output of different level control signals through the cooperation of the existing synchronization circuit and the level inverter, ensuring the timeliness of the uplink and downlink switching, and has the characteristics of low cost.

As an example, during downlink signal transmission, the synchronization unit can output a high-level to control the radio frequency switch to turn on the downlink channel, power on the power amplifier module, and turn off the second radio frequency switch. At the same time, the level inverter can output a low-level to the low noise amplifier module and the first radio frequency switch according to the high-level output by the synchronization unit, so as to control the low noise amplifier module to be powered off and the first radio frequency switch to be turned off. During uplink signal transmission, the synchronization unit can output a low-level to control the radio frequency switch to turn on the uplink channel, power off the power amplifier module and turn on the second radio frequency switch. At the same time, the level inverter can output a high-level to the low noise amplifier module and the first radio frequency switch according to the low-level output by the synchronization unit, so as to control the low noise amplifier module to be powered on and the first radio frequency switch to be turned on.

In one embodiment, the high-power uplink and downlink switching device further includes a coupler connected between the first radio frequency port and the synchronization control module. One input end of the coupler is used to connect to the first radio frequency port, and a coupling end thereof is connected to the input end of the synchronization control module.

Specifically, a coupler can be used to connect the synchronization control module and the first radio frequency port. The synchronization control module can be coupled at the first radio frequency port through the coupler to obtain a synchronization signal. Based on the above structure, the synchronization signal can be obtained through simple devices, which can reduce equipment costs while ensuring the reliability of the uplink and downlink. In addition, according to different types of synchronization signals, couplers with different parameters can be selected for matching, which improves the applicability of the embodiments of the present application.

In an embodiment, the high-power uplink and downlink switching device further includes a second microstrip line. The downlink end of the radio frequency switch is connected to the input end of the power amplifier module through the second microstrip line.

Specifically, the downlink end of the radio frequency switch and the input end of the power amplifier module are connected through the second microstrip line. The second microstrip line can be used for radio frequency power transmission. Optionally, the range of the electrical length of the second microstrip line is 10 degrees to 180 degrees. Preferably, the range of the electrical length of the second microstrip line may be 25 degrees to 35 degrees, for example, 27 degrees, 29 degrees, 30 degrees, 32 degrees or 34 degrees. The characteristic impedance of the second microstrip line ranges from 48 ohms to 52 ohms, such as 49 ohms, 50 ohms or 51 ohms.

In an embodiment, the high-power uplink and downlink switching device further includes a third microstrip line; and the output end of the power amplifier module is connected to the first port of the circulator through the third microstrip line.

Specifically, the output end of the power amplifier module and the first port of the circulator are connected by the third microstrip line. The third microstrip line can be used for radio frequency power transmission. Optionally, the electrical length of the third microstrip line can range from 10 degrees to 180 degrees; and, preferably, the electrical length of the second microstrip line can range from 25 degrees to 35 degrees, for example, 27 degrees, 29 degrees, 30 degrees, 32 degrees or 34 degrees. The characteristic impedance of the third microstrip line ranges from 48 ohms to 52 ohms, such as 49 ohms, 50 ohms or 51 ohms.

In an embodiment, the high-power uplink and downlink switching device further includes a fourth microstrip line; and the second port of the circulator is connected to the second radio frequency port through the fourth microstrip line.

Specifically, the second port of the circulator and the second radio frequency port are connected by the fourth microstrip line. The fourth microstrip line can be used for radio frequency power transmission. Optionally, the range of the electrical length of the fourth microstrip line is 10 degrees to 180 degrees; and preferably, the range of the electrical length of the second microstrip line may be 25 degrees to 35 degrees, for example, 27 degrees, 29 degrees, 30 degrees, 32 degrees or 34 degrees. The characteristic impedance of the fourth microstrip line ranges from 48 ohms to 52 ohms, such as 49 ohms, 50 ohms or 51 ohms.

In an embodiment, the high-power uplink and downlink switching device further includes a fifth microstrip line. The third port of the circulator is respectively connected to the first end of the first radio frequency switch and the first end of the first microstrip line through the fifth microstrip line.

Specifically, the first end of the fifth microstrip line is connected to the third port of the circulator, and the second end is respectively connected to the first end of the first radio frequency switch and the first end of the first microstrip line. The fifth microstrip line can be used for radio frequency power transmission. Optionally, the electrical length of the fifth microstrip line ranges from 10 degrees to 180 degrees. Preferably, the range of the electrical length of the fifth microstrip line may be 25 degrees to 35 degrees, for example, 27 degrees, 29 degrees, 30 degrees, 32 degrees or 34 degrees. The characteristic impedance of the fifth microstrip line ranges from 48 ohms to 52 ohms, such as 49 ohms, 50 ohms or 51 ohms.

In an embodiment, the high-power uplink and downlink switching device further includes a sixth microstrip line; and the second end of the first radio frequency switch is connected to the input end of the low noise amplifier module through the sixth microstrip line.

Specifically, the second end of the first radio frequency switch and the low noise amplifier module are connected through the sixth microstrip line. The sixth microstrip line can be used to ensure that the radio frequency signal runs on a path in a direction of the low-noise amplifier module when the uplink channel is working, and the radio frequency signal runs on a path in a direction of the first microstrip line when the downlink channel is working. At the same time, the sixth microstrip line can also be used for conventional radio frequency power transmission.

Optionally, the electrical length of the sixth microstrip line ranges from 10 degrees to 180 degrees. Preferably, the range of the electrical length of the sixth microstrip line may be 25 degrees to 35 degrees, for example, 27 degrees, 29 degrees, 30 degrees, 32 degrees or 34 degrees. The characteristic impedance of the sixth microstrip line ranges from 48 ohms to 52 ohms, such as 49 ohms, 50 ohms or 51 ohms.

In an embodiment, the high-power uplink and downlink switching device further includes a seventh microstrip line; and the output end of the low noise amplifier module is connected to the uplink end of the radio frequency switch through the seventh microstrip line.

Specifically, the output end of the low-noise amplifier module and the upstream end of the radio frequency switch are connected through the seventh microstrip line. The seventh microstrip line can be used for radio frequency power transmission. Optionally, the electrical length of the seventh microstrip line ranges from 10 degrees to 180 degrees. Preferably, the range of the electrical length of the seventh microstrip line may be 25 degrees to 35 degrees, for example, 27 degrees, 29 degrees, 30 degrees, 32 degrees or 34 degrees. The characteristic impedance of the seventh microstrip line ranges from 48Ω(ohms) to 52 ohms, such as 49 ohms, 50 ohms or 51 ohms.

In an embodiment, the characteristic impedance of the first microstrip line ranges from 50 ohms to 100 ohms.

Specifically, the characteristic impedance of the first microstrip line may be 75 ohms, 79 ohms, 85 ohms, 90 ohms, 95 ohms, or 99 ohms.

In one embodiment, the electrical length of the first microstrip line ranges from 85 degrees to 95 degrees.

Specifically, the electrical length of the first microstrip line can be 87 degrees, 89 degrees, 91 degrees, or 93 degrees. Based on the above structure, the Radio frequency impedance of the first microstrip line from the first end to the second end can be greater than 300 ohms. It should be noted that the value of the electrical length of the first microstrip line can be fine-tuned on the basis of a quarter wavelength to obtain a better high resistance state.

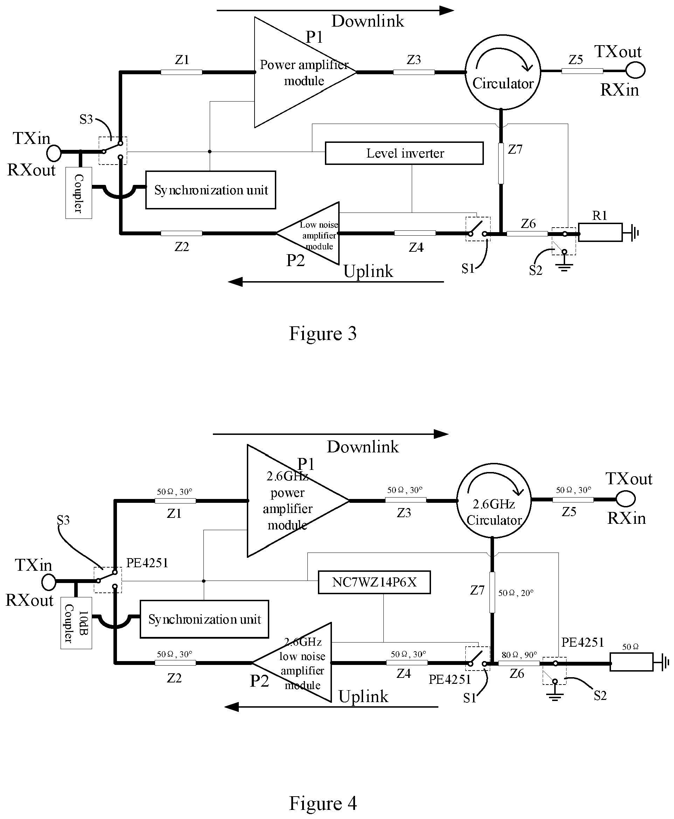

In one embodiment, as shown in figure 3, a high-power uplink and downlink switching device mainly includes: a first radio frequency switch S1, a second radio frequency switch S2, a radio frequency switch S3, a microstrip line Z1 (a second microstrip line), Z2 (a seventh microstrip line), Z3 (a third microstrip line), Z4 (a sixth microstrip line), Z5 (a fourth microstrip line), Z6 (a first microstrip line) and Z7 (a fifth microstrip line), a power amplifier module PI, a circulator, a low noise amplifier module P2, a synchronization unit, a level inverter and a load resistor R1 and the like. Here, Z1, Z2, Z3, Z4, Z5, Z6 are 50 ohm microstrip lines, and the electrical length of Z6 is a quarter wavelength of the operating frequency. The characteristic impedance can be selected according to the design requirements of high resistance and power capacity, and generally 50 ohms to 100 ohms can be selected. That is, it is necessary to ensure that after the Radio frequency switches S1 and S2 are closed, the Radio frequency impedance will enter a high-impedance state after passing through a quarter-wavelength line from 0 ohm, so that the uplink signal enters the uplink channel completely through the first radio frequency switch S1. At the same time, it is ensured that after the radio frequency switches S1 and S2 are disconnected, the reflection radio frequency signal from the second radio frequency port is completely absorbed by the load resistor R1 without affecting the uplink channel. Based on this, the entire switching device does not use high-power radio frequency switches, thereby solving the bottleneck that the current industry does not have high-power radio frequency switches.

Based on the above structure, the implementation process of the high-power TDD uplink and downlink switching device may include:
1) the synchronization unit generates and provides a control signal 1, and controls the power amplifier module PI, the second radio frequency switch S2, and the radio frequency switch S3;
2) the synchronization signal provides a control signal 2 through the level inverter, and controls the low noise amplifier module P2 and the first radio frequency switch S1;
3) when the control signal 1 is at high-level (control signal 2 is at low-level), S1 is set to be off, S2 is set to be off, and S3 is set to turn on the downlink, the power amplifier module P1 is on, and low noise amplifier Module P2 is off; the Radio frequency signal enters from TXin, and enters the power amplifier module P1 through the RF switch S3 and the microstrip line Z1, and then after power amplification, the Radio frequency signal enters the circulator via the microstrip line Z3; furthermore, a forward signal reaches the TXout port after passing through the microstrip line Z5 and then is output, and a reverse signal enters the high-power load resistor R1 after passing through the microstrip lines Z7 and Z6; and
4) when the control signal 2 is at a high-level (the control signal 1 is at a low-level), S1 is set to be off, S2 is set to be off, and S3 is set to turn on the uplink, the low noise amplifier module P2 is set to turn on and the power amplification module P1 is set to be off; the radio frequency signal enters from RXin, passes through the circulator and the microstrip line Z7, enters the first radio frequency switch S1, and then enters the low noise amplifier module P2 via the microstrip line Z4; after the low noise amplifier module amplifies the radio frequency signal, the radio frequency signal reaches the RXout port after passing through the microstrip line Z2 and the radio frequency switch S3, and is output.

In one embodiment, the corresponding device components can be selected according to actual frequency requirements.

In one example, a 2.6GHz high-power integrated uplink and downlink active device is provided, as shown in figure 4, including Radio frequency switches S1, S2 and S3 (model PE4251), a synchronization unit, a 2.6GHz power amplifier module, a 2.6GHz low noise amplifier module, a 2.6GHz circulator and a voltage inverter (model NC7WZ1P6X). One output port of the radio frequency switch S3 (PE4251) is connected to an input end of the 2.6HGz power amplifier module through the microstrip line Z1, and the other output port is connected to an output end of the 2.6GHz low noise amplifier module through the microstrip line Z2. An output end of the 2.6GHz power amplifier module is connected to a first port of the 2.6GHz circulator through the microstrip line Z3. A second port of the 2.6GHz circulator is connected to the TXout (RXin) port through the microstrip line Z5. A third port of the 2.6GHz circulator is respectively connected to an input end of the radio frequency switch S1 and a first end of the microstrip line Z6 through the microstrip line Z7. The microstrip line Z6 is connected to the load resistor R1 through a first end of the radio frequency switch S2. An output end of the radio frequency switch S1 is connected to an input end of the 2.6GHz low noise amplifier module through the microstrip line Z4. Here, the characteristic impedance of the microstrip lines Z1, Z2, Z3, Z4, Z5, and Z7 are all 50 ohms, and the electrical length can be selected as 30 degrees according to the circuit board layout requirements. The characteristic impedance and electrical length selection principle of the microstrip line Z6 is: in a direction from the connection point of the radio frequency switch S1 and the microstrip line Z6 to the other end of the microstrip line Z6, the radio frequency impedance is in a high impedance state (for example, greater than 300 ohms), so that no radio frequency power leaks to the load resistor R1 when the uplink is on. For example, the characteristic impedance of Z6 is 80 ohms and the electrical length is 89 degrees.

Based on the above structure, the implementation steps of a 2.6GHz high-power uplink and downlink switching device may include:
1) the synchronization unit couples the signal from the radio frequency input end (TXin/RXout), processes the signal and generates a synchronization signal, which is used to control the switch between the uplink and the downlink; the synchronization signal output by the synchronization unit is determined to be the control signal 1, and the control signal 1 outputs the control signal 2 after passing through the voltage inverter NC7WZ146X;
2) when the control signal 1 is high (the control signal 2 is low), the radio frequency switch S1 (PE4251) is set to be off, S2 (PE4251) is set to be off, and S3 (PE4251) is set to turn on the downlink, the power amplifier module P1 is set to turn on and the low noise amplifier module P2 is set to turn off; the radio frequency signal enters from TXin, enters the 2.6GHz power amplifier module P1 through the radio frequency switch S3 (PE4251) and the microstrip line Z1, and the Radio frequency signal is amplified by the power and enters the 2.6GHz circulator via the microstrip line Z3; a forward signal passes through the microstrip line Z5 and then reaches the TXout port for output; a reverse signal passes through the microstrip line Z7 and Z6 and then enters the high-power load resistor R1; and
3) when the control signal 2 is high (the control signal 1 is low), the radio frequency switch S1 (PE4251) is set to be off, S2 (PE4251) is set to be off, and S3 (PE4251) is set to turn on the uplink and the low noise amplifier module P2 is turned on and the power amplifier module P1 is turned off; the radio frequency signal enters from RXin, enters the radio frequency switch S1 (PE4251) after passing through the 2.6GHz circulator and the microstrip line Z7; then the radio frequency signal enters the 2.6GHz low noise amplifier module through the microstrip line Z4, and then reaches the RXout port through the microstrip line Z2 and the radio frequency switch S3 (PE4251) to be output.

In an embodiment, a communication apparatus is provided, including the above-mentioned high-power uplink and downlink switching device.

## Claims

1. A high-power uplink and downlink switching device, comprising:
a radio frequency switch, a common end of which is used to connect to a first radio frequency port;
a power amplifier module, an input end of which is connected to a downlink end of the radio frequency switch;
a circulator, a first port of which is connected to an output end of the power amplifier module, and a second port of which is used to connect to a second radio frequency port;
a first radio frequency switch, a first end of which is connected to a third port of the circulator;
a low noise amplifier module, an input end of which is connected to a second end of the first radio frequency switch, and an output end of which is connected to an uplink end of the radio frequency switch;
a first microstrip line, a first end of which is connected to the third port of the circulator, wherein the radio frequency impedance from the first end to a second end of the first microstrip line is in a high impedance state;
a load resistor, a first end of which is connected to the second end of the first microstrip line, and the second end of which is grounded;
a second radio frequency switch, a first end of which is connected to the second end of the first microstrip line, and a second end of which is grounded; and
a synchronization control module, an input end of which is used to connect to the first radio frequency port, and an output end of which is respectively connected to a control end of the radio frequency switch, a control end of the first radio frequency switch and a control end of the second radio frequency switch.

2. The high-power uplink and downlink switching device as recited in claim 1, wherein the output end of the synchronization control module is connected to a control end of the power amplifier module and a control end of the low noise amplifier module respectively.

3. The high-power uplink and downlink switching device as recited in claim 2, wherein:
the synchronization control module includes a synchronization unit and a level inverter;
an input end of the synchronization unit is used to connect to the first radio frequency port, and an output end of the synchronization unit is respectively connected to an input end of the level inverter, the control end of the radio frequency switch, the control end of the power amplifier module, and the control end of the second radio frequency switch;
an output end of the level inverter is respectively connected to the control end of the low noise amplifier module and the control end of the first radio frequency switch.

4. The high-power uplink and downlink switching device as recited in claim 1, further comprising a coupler connected between the first radio frequency port and the synchronization control module; an input end of the coupler is used to connect to the first radio frequency port, and a coupling end thereof is connected to the input end of the synchronization control module.

5. The high-power uplink and downlink switching device as recited in claim 1, further comprising a second microstrip line, a third microstrip line, a fourth microstrip line, a fifth microstrip line, a sixth microstrip line, and a seventh microstrip line;
the downlink end of the radio frequency switch is connected to the input end of the power amplifier module through the second microstrip line;
the output end of the power amplifier module is connected to the first port of the circulator through the third microstrip line;
the second port of the circulator is connected to the second radio frequency port through the fourth microstrip line;
the third port of the circulator is respectively connected to the first end of the first radio frequency switch and the first end of the first microstrip line through the fifth microstrip line;
the second end of the first radio frequency switch is connected to the input end of the low noise amplifier module through the sixth microstrip line;
the output end of the low noise amplifier module is connected to the uplink end of the radio frequency switch through the seventh microstrip line.

6. The high-power uplink and downlink switching device as recited in claim 5, wherein the electrical lengths of the second microstrip line, the third microstrip line, the fourth microstrip line, the fifth microstrip line, the sixth microstrip line, and the seventh microstrip line are all in a range of 10 degrees to 180 degrees.

7. The high-power uplink and downlink switching device as recited in claim 5, wherein the characteristic impedances of the second microstrip line, the third microstrip line, the fourth microstrip line, the fifth microstrip line, the sixth microstrip line, and the seventh microstrip line are all in a range of 48 ohms to 52 ohms.

8. The high-power uplink and downlink switching device according to any one of claims 1 to 7, wherein the characteristic impedance of the first microstrip line ranges from 50 ohms to 100 ohms.

9. The high-power uplink and downlink switching device according to any one of claims 1 to 7, wherein the electrical length of the first microstrip line ranges from 85 degrees to 95 degrees.

10. A communication apparatus comprising the high-power uplink and downlink switching device according to any one of claims 1 to 9.
